# EUROPEAN PATENT SPECIFICATION

(11) **EP 3 578 719 B1**
(45) Date of publication and mention of the grant of the patent: **16.08.2023**
(21) Application number: 18849852.1
(22) Date of filing: 23.08.2018
(51) Int. Cl.: E02F 9/02, B60K 17/22, E02F 9/12

(54) **CONSTRUCTION MACHINERY**
BAUMASCHINEN
ENGIN DE CONSTRUCTION

(30) Priority: 31.08.2017 JP 2017166753
(43) Date of publication of application: 11.12.2019
(73) Proprietor: Hitachi Construction Machinery Co., Ltd., Taito-ku Tokyo 110-0015 (JP)
(72) Inventor: KOBAYASHI, Shintaro, Tsuchiura-shi Ibaraki 300-0013 (JP); SUZUKI, Shouhei, Tsuchiura-shi Ibaraki 300-0013 (JP)
(74) Representative: Manitz Finsterwald Patent- und Rechtsanwaltspartnerschaft mbB
(86) International application number: PCT/JP2018/031189
(87) International publication number: WO 2019/044658

(56) References cited:
- EP-A1- 2 036 802
- EP-A1- 2 487 299
- EP-A1- 2 623 357
- EP-A1- 2 990 692
- JP-A- S5 355 826
- JP-A- H06 173 297
- JP-A- H06 173 297
- JP-A- 2000 343 972
- JP-A- 2012 071 671
- JP-A- 2014 150 700
- JP-U- H0 446 923
- JP-U- S6 095 233
- US-A1- 2009 101 458

## Description

### CONSTRUCTION MACHINE

### TECHNICAL FIELD

The present invention relates to a construction machine such as a wheel-type hydraulic excavator or the like having left and right front wheels and left and right rear wheels.

### BACKGROUND ART

In general, a wheel-type hydraulic excavator is configured by an automotive lower traveling structure having left and right front wheels and left and right rear wheels and an upper revolving structure rotatably mounted on the lower traveling structure through a swing circle and in which a prime mover is mounted. A working mechanism is tiltably provided on a front side of the upper revolving structure.

The lower traveling structure for the wheel-type hydraulic excavator is configured by a chassis, a front axle on which left and right front wheels are mounted, a rear axle on which left and right rear wheels are mounted, a drive device rotatively driving the front axle and the rear axle by power of the prime mover, and a propeller shaft transmitting output of the drive device to the front axle and the rear axle. A suspension system is provided between the chassis and the front axle. The front axle is supported capable of swinging in a upper-lower direction depending on the degree of unevenness on the road surface and other factors by the suspension system.

Thus, the propeller shaft transmitting the output of the drive device to the front axle is required to absorb swing in the upper-lower direction of the front axle supported on the suspension system. Therefore, the propeller shaft is configured to include a drive device side propeller shaft connected to the drive device, a wheel axle side propeller shaft connected to the front axle, and a universal joint connecting the drive device side propeller shaft and the wheel axle side propeller shaft. A midway part of the drive device side propeller shaft is supported rotatably to the chassis through a center bearing.

Incidentally, since the propeller shaft and the center bearing are disposed on a lower surface side of the chassis, the propeller shaft and the center bearing are exposed to earth and sand, muddy water and the like at the traveling of the wheel-type hydraulic excavator. When dust and the like intruded into the center bearing, a smoothly rotation of a drive device side propeller shaft fails. Therefore, an automobile propeller shaft preventing dust or the like intrusion into a center bearing is proposed by covering the center bearing as a weakened part by an elastic body (see JP 2008-273267 A and JP 2008-208903 A) .

JP H06-173297 A discloses a construction machine according to the preamble of claim 1.

### SUMMARY OF THE INVENTION

Nevertheless, a construction machine such as a wheel-type hydraulic excavator often travels not only on ordinary even roads, but also in uneven work sites. Thus, it is necessary to prevent rocks from colliding against not only a center bearing but also a propeller shaft in a work site where rocks and the like are scattered. Therefore, a propeller shaft or a center bearing needs covering from below by a strength metal cover.

In this case, a front axle supported on a chassis through a suspension system swings in a upper-lower direction (swings vertically) depending on the degree of unevenness on the road surface. Therefore, a wheel axle side propeller shaft is also displaced in the upper-lower direction with a universal joint serving as a fulcrum by tracing the front axle swinging. Thus, a cover covering the wheel axle side propeller shaft from below needs mounting by preparing clearance enough to allow for displacement of the wheel axle side propeller shaft in the upper-lower direction.

On the other hand, a drive device side propeller shaft is not displaced in the upper-lower direction because a midway part thereof is supported on a center bearing. Thus, clearance of a part covering the drive device side propeller shaft in the cover becomes larger than required when the wheel axle side propeller shaft and the drive device side propeller shaft are covered with a single cover from below. As a result, the weight of the entire cover increases. According to this, lower height from the ground to the cover causes a problem where the part covering the drive device side propeller shaft in the cover readily collides against rocks and the like.

The present invention is made in view of the aforementioned problems of the prior art, and an object of the present invention is to provide a construction machine which constitutes a cover covering a drive device side propeller shaft and a wheel axle side propeller shaft without increasing the weight of the entire cover and suppresses collision of a part covering the drive device side propeller shaft against rocks and the like.

In order to solve the aforementioned problems, the present invention is applied to a construction machine including an automotive lower traveling structure having left and right front wheels and left and right rear wheels; and an upper revolving structure rotatably mounted on the lower traveling structure through a swing circle and in which a prime mover is provided; the lower traveling structure being configured to include: a chassis constituted by a support structure; a front axle provided on a front side of the chassis and on which the left and right front wheels are mounted; a rear axle provided on a rear side of the chassis and on which the left and right rear wheels are mounted; a drive device mounted on the chassis and rotatively driving the front axle and the rear axle by power of the prime mover; and a propeller shaft transmitting output of the drive device to the front axle and the rear axle, wherein a suspension system is provided between the chassis and a wheel axle which is any one of the front axle and the rear axle, and supports capable of swinging the wheel axle in a upper-lower direction, the propeller shaft comprising: a drive device side propeller shaft connected to the drive device; a wheel axle side propeller shaft connected to the one of the front axle and the rear axle supported by the suspension system; and a universal joint connecting the drive device side propeller shaft and the wheel axle side propeller shaft.

A feature of the present invention is that the lower traveling structure includes a drive device side propeller shaft cover provided on a lower surface of the chassis and covering the drive device side propeller shaft from below; and a wheel axle side propeller shaft cover provided on the lower surface of the chassis and covering the wheel axle side propeller shaft from below, wherein an interval in the upper-lower direction between a bottom surface of the wheel axle side propeller shaft cover and the lower surface of the chassis is set larger than an interval in the upper-lower direction between a bottom surface of the drive device side propeller shaft cover and the lower surface of the chassis.

According to the present invention, interference of a wheel axle side propeller shaft with a wheel axle side propeller shaft cover can be suppressed even if the wheel axle side propeller shaft is displaced in the upper-lower direction with a universal joint serving as a fulcrum by tracing the wheel axle swinging in the upper-lower direction. On the other hand, a height from the ground to a bottom surface of a drive device side propeller shaft cover can be set larger than a height from the ground to the wheel axle side propeller shaft cover to suppress collision of rocks and the like against the drive device side propeller shaft cover.

### BRIEF DESCRIPTION OF THE DRAWINGS

Fig. 1 is a front view showing a wheel-type hydraulic excavator as a construction machine according to the embodiment of the present invention.
Fig. 2 is a front view showing a lower traveling structure in a state where a drive device side propeller shaft cover, a wheel axle side propeller shaft cover, a step device, a right front wheel and a right rear wheel are removed.
Fig. 3 is a bottom view showing the lower traveling structure of the wheel-type hydraulic excavator as viewed in the direction of arrows III-III in Fig. 2.
Fig. 4 is a perspective view showing a single chassis of the lower traveling structure.
Fig. 5 is a front view showing a chassis in a state where a drive device side propeller shaft cover and a wheel axle side propeller shaft cover are mounted.
Fig. 6 is a bottom view showing a chassis when seen from a lower surface side in a state where a drive device side propeller shaft cover and a wheel axle side propeller shaft cover are mounted.
Fig. 7 is an exploded perspective view showing a drive device side propeller shaft cover, a drive device side front bracket, and a drive device side rear bracket.
Fig. 8 is an exploded perspective view showing a wheel axle side propeller shaft cover, a wheel axle side front bracket, and a wheel axle side rear bracket.
Fig. 9 is an enlarged view showing an essential part showing a state where a IX part in Fig. 5 is enlarged.

### MODE FOR CARRYING OUT THE INVENTION

Hereinafter, an embodiment of a construction machine according to the present invention will be in detail explained with reference to the accompanying drawings by taking a case in which the construction machine is applied to a wheel-type hydraulic excavator as an example.

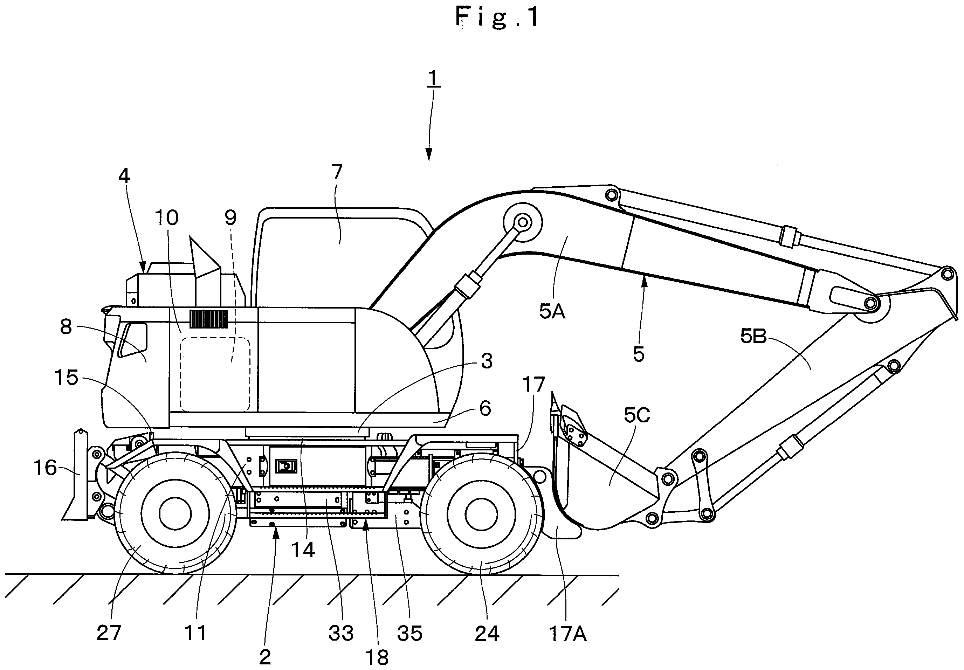

In Fig. 1, a wheel-type hydraulic excavator 1 is largely configured by a wheel-type lower traveling structure 2 having left and right front wheels 24 and left and right rear wheels 27 which will be described later, an upper revolving structure 4 rotatably mounted on the lower traveling structure 2 through a swing circle 3, and a working mechanism 5 liftably and tiltably provided on a front side of the upper revolving structure 4. The lower traveling structure 2 and the upper revolving structure 4 constitute a vehicle body of the wheel-type hydraulic excavator 1. The wheel-type hydraulic excavator 1 is automotive to a work site by the lower traveling structure 2. The working mechanism 5 is configured to include a boom 5A, an arm 5B, and a bucket 5C to perform an excavating work of earth and sand at a work site or the like.

The upper revolving structure 4 for the wheel-type hydraulic excavator 1 has a revolving frame 6 rotatably mounted on a chassis 11 which will be described later through the swing circle 3. A cab 7 defining an operator's room is provided on a left front side of the revolving frame 6. A counterweight 8 taking a weight balance with the working mechanism 5 is provided on a rear end side of the revolving frame 6. An engine 9 as a prime mover driving a hydraulic pump (not shown) is provided on a front side of the counterweight 8. Onboard equipment such as the engine 9, a hydraulic pump or the like are covered with an exterior cover 10.

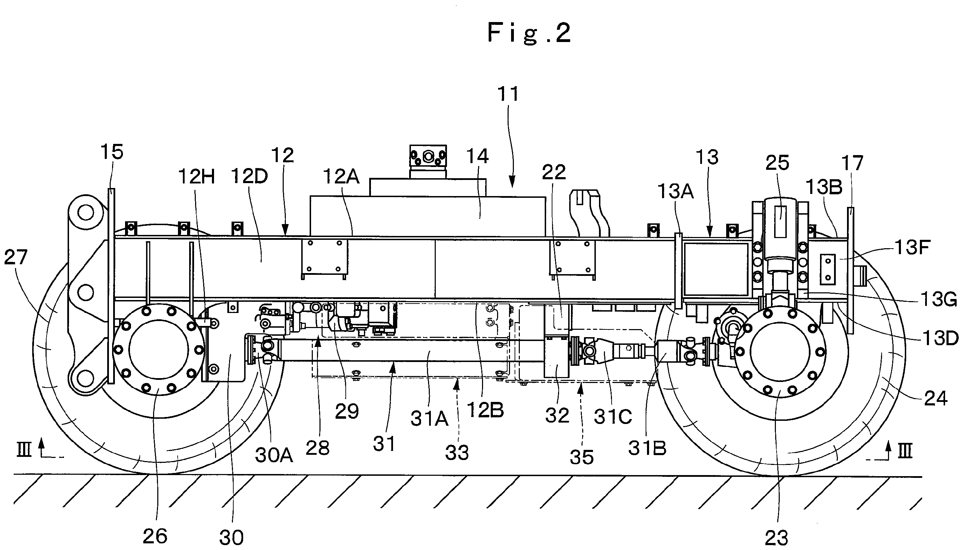

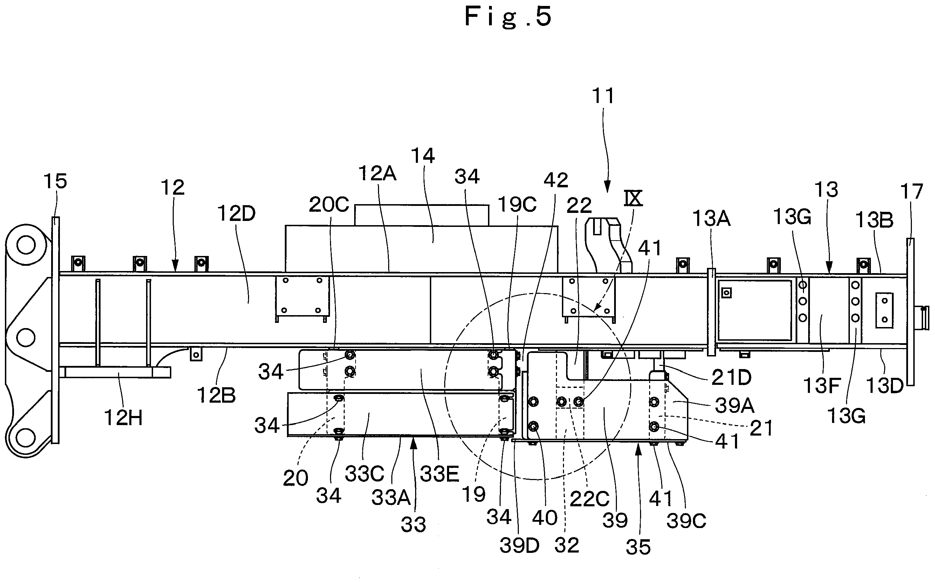

The lower traveling structure 2 for the wheel-type hydraulic excavator 1 is configured to include, as shown in Fig. 2 to Fig. 6, a chassis 11, a front axle 23, a rear axle 26, a drive device 28, a propeller shaft 31, a drive device side propeller shaft cover 33, and a wheel axle side propeller shaft cover 35 which will be described later.

The chassis 11 is to be a base of the lower traveling structure 2, and formed as a firm support structure extending in a front-rear direction. The chassis 11 is configured by a rear chassis 12 and a front chassis 13 fixed on a front side of the rear chassis 12 through an intermediate plate 13A. A circle member 14 and a rear axle 26 which will be described later are mounted on the rear chassis 12, and a front axle 23 which will be described later is mounted on the front chassis 13. The rear chassis 12 constitutes a box structure surrounded by a top plate 12A extending horizontally in the front-rear direction, a lower surface plate 12B faced with the top plate 12A in the upper-lower direction, a left side surface plate 12C, and a right side surface plate 12D. The left side surface plate 12C and the right side surface plate 12D are disposed between the top plate 12A and the lower surface plate 12B and faced with each other in the left-right direction. The lower surface plate 12B is provided with a rectangular shaped elongated-hole opening 12E extending in the front-rear direction and a circular opening 12F located on a front side of the elongated-hole opening 12E. Left and right wheel axle case mounting plates 12G, 12H are fixed to a rear end side of the lower surface plate 12B of the rear chassis 12. A rear axle case 26A which will be described later is mounted on the left and right wheel axle case mounting plates 12G, 12H.

A cylindrical circle member 14 is provided at an intermediate part in the front-rear direction of the top plate 12A of the rear chassis 12. An inner ring of the swing circle 3 is mounted on the circle member 14, and the revolving frame 6 of the upper revolving structure 4 is mounted on an outer ring of the swing circle 3. Here, the circle member 14 has high strength. Thus, an inner part of the circle member 14 in the chassis 11 demonstrates minor deformation and an outer part of the circle member 14 shows major deformation when the chassis 11 is deformed at the traveling and the like of the wheel-type hydraulic excavator 1.

On the other hand, the front chassis 13 constitutes a box structure surrounded by a top plate 13B extending horizontally in a front-rear direction, a left lower surface plate 13C, a right lower surface plate 13D, a left side surface plate 13E, and a right side surface plate 13F. The left lower surface plate 13C and the right lower surface plate 13D are disposed with an interval in the left-right direction and faced with the top plate 13B in the upper-lower direction. The left side surface plate 13E connects the top plate 13B and the left lower surface plate 13C, and the right side surface plate 13F connects the top plate 13B and the right lower surface plate 13D. Suspension system mounting plates 13G (only the right side surface plate 13F side is shown) are fixed to each of the left side surface plate 13E and the right side surface plate 13F. A suspension system 25 which will be described later is mounted on the suspension system mounting plate 13G.

A rear attachment mounting plate 15 is provided on a rear end of the rear chassis 12. The rear attachment mounting plate 15 is formed as a rectangular shaped plate extending in the left-right direction, on which for example, an earth removing plate device 16 is mounted (see Fig. 1). On the other hand, a front attachment mounting plate 17 is provided at a front end of the front chassis 13. The front attachment mounting plate 17 is formed as a rectangular shaped plate extending in the left-right direction, on which for example, a bucket holder 17A is mounted (see Fig. 1). The bucket holder 17A holds the bucket 5C of the working mechanism 5 at the traveling of the wheel-type hydraulic excavator 1. A step device 18 is provided on each of the left side surface plate 12C and the right side surface plate 12D of the rear chassis 12 (only the right side of the step device 18 is shown in Fig. 1). The step device 18 is disposed between the front wheel 24 and the rear wheel 27 in the state where the step device 18 protrudes in the left-right direction from the left and right side surface plates 12C, 12D to form a foothold for an operator to get on and get off the cab 7.

Subsequently, a drive device side front bracket 19, a drive device side rear bracket 20, a wheel axle side front bracket 21, and a wheel axle side rear bracket 22, which are provided on the lower surface plate 12B of the rear chassis 12, will be described.

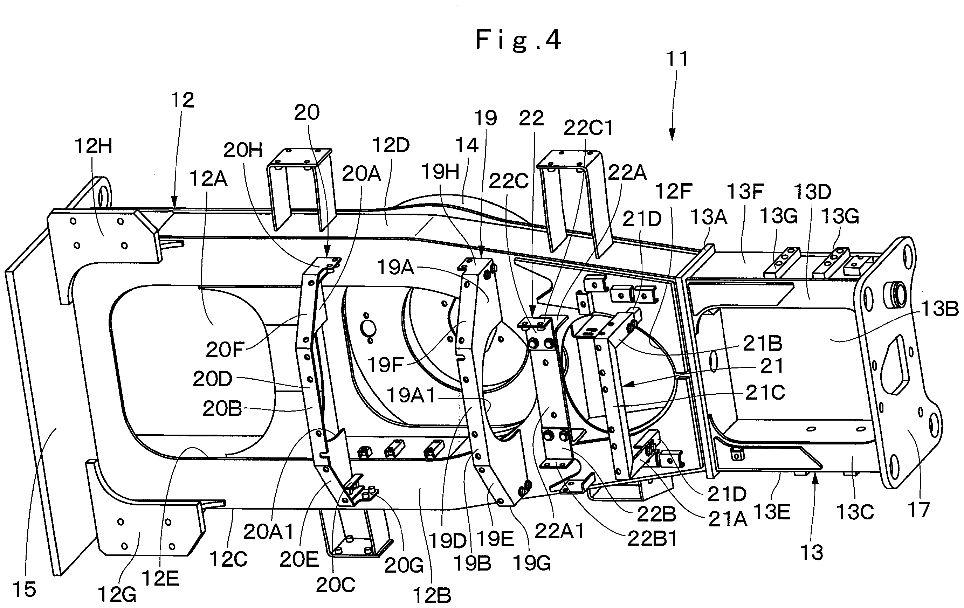

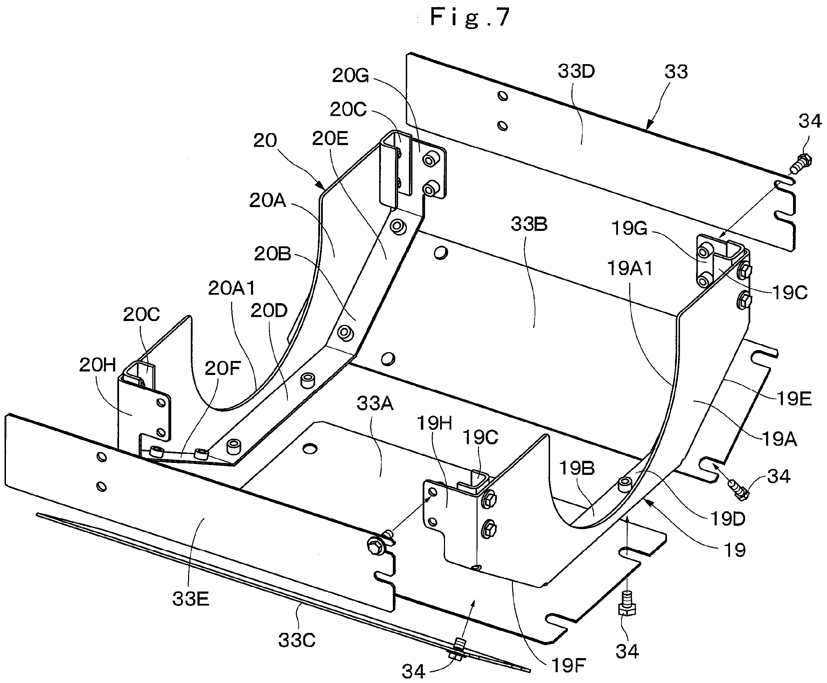

The drive device side front bracket 19 is provided on the lower surface plate 12B of the rear chassis 12 and constitutes a drive device side bracket together with the drive device side rear bracket 20 which will be described later. As shown in Fig. 4 and Fig. 7, the drive device side front bracket 19 is configured by upright plates 19A extending in the left-right direction so as to cross over the elongated-hole opening 12E of the lower surface plate 12B and folded plates 19B folded rearward from an outer peripheral side of an upright plate 19A. The upright plates 19A are configured by a mountain-shape plate of an intermediate part protruding downward in the left-right direction (length direction). Here, a U-shaped notched propeller shaft insertion part 19A1 is provided at a center part of the upright plates 19A in the left-right direction from an upper side (the rear chassis 12 side) to downward. A drive device side propeller shaft 31A which will be described later is inserted through the propeller shaft insertion part 19A1. The upright plate 19A is mounted on the left and right screw seat members 19C fixed on the lower surface plate 12B of the rear chassis 12 by using a bolt. As a result, the drive device side front bracket 19 protrudes from the lower surface plate 12B of the rear chassis 12 to downward.

On the other hand, the folded plate 19B is configured by a lower plate 19D parallel to the lower surface plate 12B of the rear chassis 12, a left inclined plate 19E, a right inclined plate 19F, a left side plate 19G, and a right side plate 19H. The left inclined plate 19E extends diagonally upward from a left end of the lower plate 19D toward the rear chassis 12, and the right inclined plate 19F extends diagonally upward from a right end of the lower plate 19D toward the rear chassis 12. The left side plate 19G extends vertically upward from an upper end of the left inclined plate 19E toward the rear chassis 12, and the right side plate 19H extends vertically upward from an upper end of the right inclined plate 19F toward the rear chassis 12.

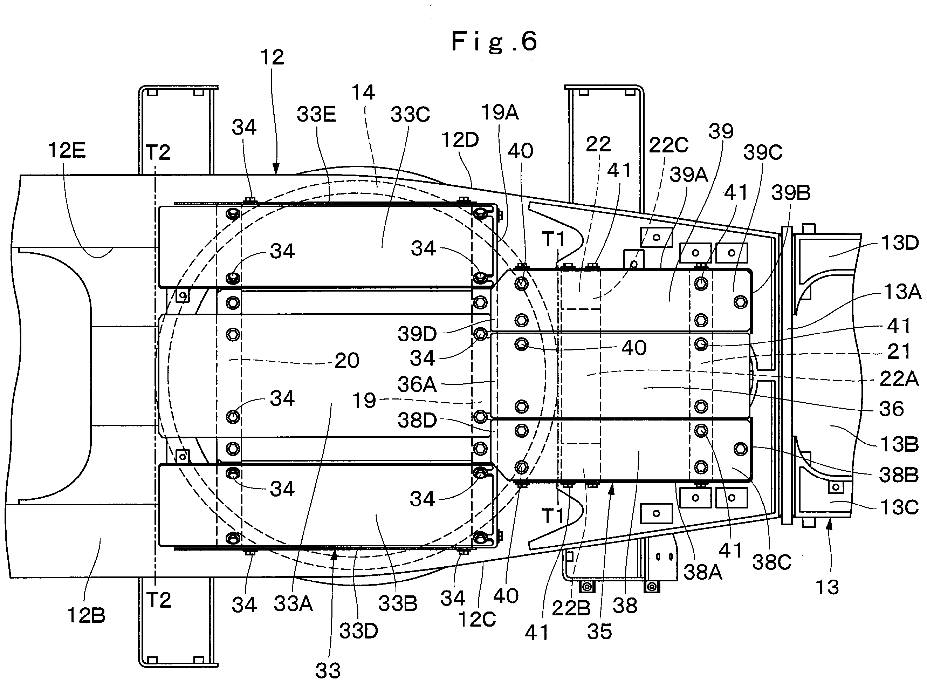

The drive device side rear bracket 20 is located on a rear side of the drive device side front bracket 19, and provided on the lower surface plate 12B of the rear chassis 12. The drive device side rear bracket 20 is opposite to the drive device side front bracket 19 in the front-rear direction. Here, as shown in Fig. 6, a tangent which is perpendicular in the longitudinal direction of the chassis 11 and is tangent to a front end of the circle member 14 is defined as a front side tangent T1-T1 of the circle member 14. In addition, a tangent which is perpendicular in the longitudinal direction of the chassis 11 and is tangent to a rear end of the circle member 14 is defined as a rear side tangent T2-T2 of the circle member 14. The drive device side front bracket 19 and the drive device side rear bracket 20 which constitute a drive device side bracket are provided on the lower surface plate 12B of the rear chassis 12, and are disposed within a range that is on a rear side with respect to the front side tangent T1-T1 of the circle member 14. In addition, the drive device side rear bracket 20 is provided on the lower surface plate 12B of the rear chassis 12, and is disposed within a range that is on a front side with respect to the rear side tangent T2-T2 of the circle member 14. That is, the drive device side front bracket 19 and the drive device side rear bracket 20 are disposed within a range between the front side tangent T1-T1 and the rear side tangent T2-T2 (substantially inner side of circle member 14). In this case, the drive device side rear bracket 20 has substantially the same shape as the drive device side front bracket 19. The drive device side rear bracket 20 is configured by an upright plate 20A constituted by a mountain-shape plate and a folded plate 20B folded forward from an outer peripheral side of the upright plate 20A and a propeller shaft insertion part 20A1 is formed at a center part in the left-right direction of the upright plate 20A.

The upright plate 20A of the drive device side rear bracket 20 is mounted on left and right screw seat members 20C fixed on the lower surface plate 12B of the rear chassis 12 by using a bolt. As a result, the drive device side rear bracket 20 protrudes from the lower surface plate 12B of the rear chassis 12 to downward in the state where the drive device side rear bracket 20 is faced with the drive device side front bracket 19 in the front-rear direction. On the other hand, the folded plate 20B of the drive device side rear bracket 20 is configured by a lower plate 20D, a left inclined plate 20E, a right inclined plate 20F, a left side plate 20G, and a right side plate 20H, as in the folded plate 19B of the drive device side front bracket 19.

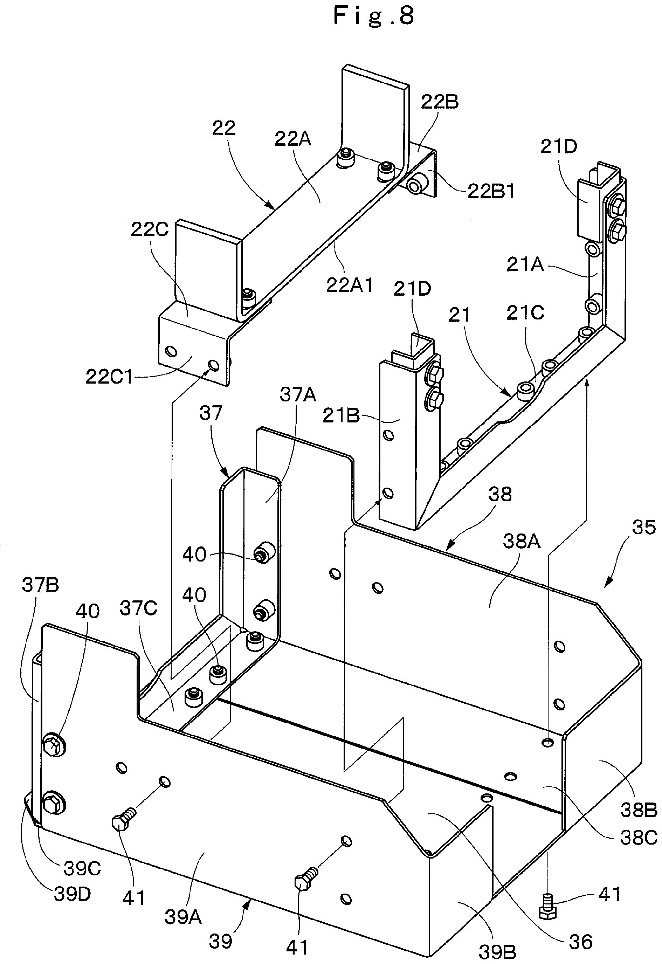

The wheel axle side front bracket 21 is located closer to the front side (front chassis 13 side) than the drive device side front bracket 19, and provided on the lower surface plate 12B of the rear chassis 12. The wheel axle side front bracket 21 constitutes a wheel axle side bracket together with a wheel axle side rear bracket 22 which will be described later. As shown in Fig. 4 and Fig. 8, the wheel axle side front bracket 21 is formed by folding a plate having an L-shaped section into a U-shape, and extends in the left-right direction so as to cross over the circular opening 12F of the lower surface plate 12B.

The wheel axle side front bracket 21 has a left side plate 21A and a right side plate 21B extending from the lower surface plate 12B of the rear chassis 12 downward and faced with each other in the left-right direction, and a lower plate 21C connecting the lower ends of the left side plate 21A and the right side plate 21B and extending in the left-right direction. The left side plate 21A and the right side plate 21B are mounted on left and right screw seat members 21D fixed on the lower surface plate 12B of the rear chassis 12 by using a bolt. As a result, the wheel axle side front bracket 21 protrudes from the lower surface plate 12B of the rear chassis 12 downward.

The wheel axle side rear bracket 22 is located between the drive device side front bracket 19 and the wheel axle side front bracket 21, and provided on the lower surface plate 12B of the rear chassis 12. The wheel axle side rear bracket 22 is faced with the wheel axle side front bracket 21 in the front-rear direction. Here, as shown in Fig. 6, the wheel axle side front bracket 21 and the wheel axle side rear bracket 22 which constitute a wheel axle side bracket are provided on the lower surface plate 12B of the rear chassis 12, and are disposed within a range that is on a front side with respect to the front side tangent T1-T1 of the circle member 14. That is, the wheel axle side front bracket 21 and the wheel axle side rear bracket 22 are disposed within a range of an outer side of the circle member 14.

The wheel axle side rear bracket 22 is configured to include a bracket body 22A constituted by a plate bent having a U-shape, a left mounting plate 22B and a right mounting plate 22C mounted on the bracket body 22A. Here, a center bearing 32 which will be described later is configured to be mounted on a lower surface 22A1 of the bracket body 22A. The left mounting plate 22B and the right mounting plate 22C of the wheel axle side rear bracket 22 are each configured by a plate bent having an L-shape, and mounted on the lower surface 22A1 of the bracket body 22A by using a bolt. The left mounting plate 22B has a left side surface 22B1 extending from the bracket body 22A downward, and the right mounting plate 22C has a right side surface 22C1 extending from the bracket body 22A downward.

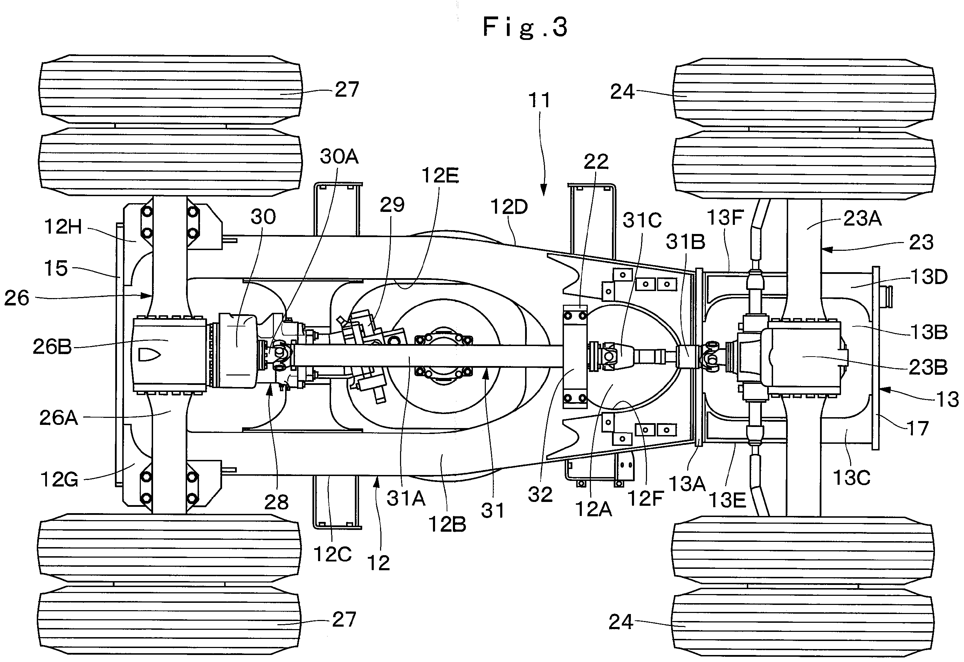

A front axle 23 is provided on a lower side of the front chassis 13, and extends in the left-right direction. Left and right front wheels 24 are mounted on both left and right sides of the front axle 23. As shown in Fig. 3, the front axle 23 is connected to a drive device 28 through a propeller shaft 31 which will be described later to rotate the left and right front wheels 24 by power of the engine 9. Here, the front axle 23 has a front axle case 23A accommodating a wheel axle body (not shown) and extending in the left-right direction. A differential device 23B is provided at an intermediate part of the front axle case 23A in the left-right direction. A wheel axle side propeller shaft 31B which will be described later is connected to the differential device 23B of the front axle 23, and a rotation of the wheel axle side propeller shaft 31B is transmitted to the front axle 23 through the differential device 23B.

Here, suspension system mounting plates 13G are provided on each of left and right side surface plates 13E, 13F of the front chassis 13, and left and right suspension systems 25 are mounted on the suspension system mounting plates 13G (only the right side of the suspension systems 25 is shown in Fig. 2) . The left and right suspension systems 25 support the front axle 23 capable of swinging in the upper-lower direction with respect to the front chassis 13. As a result, the front axle 23 supporting the left and right front wheels 24 can swing (be displaced) in the upper-lower direction depending on the degree of unevenness on the road surface at the traveling of the wheel-type hydraulic excavator 1.

A rear axle 26 is provided on a lower side of the rear chassis 12, and extends in the left-right direction. Left and right rear wheels 27 are mounted on both left and right sides of the rear axle 26. The rear axle 26 has a rear axle case 26A accommodating a wheel axle body (not shown) and extending in the left-right direction. A differential device 26B is provided at an intermediate part of the rear axle case 26A in the left-right direction. An output shaft 30A of power transmission device 30 which will be described later is connected to the differential device 26B of the rear axle 26, and a rotation of the output shaft 30A is transmitted to the rear axle 26 through the differential device 26B, thereby rotating the left and right rear wheels 27. That is, in this embodiment, the output shaft 30A of the power transmission device 30 serves also as a propeller shaft transmitting output of the drive device 28 to the rear axle 26. Here, both left and right sides of the rear axle case 26A are mounted on the left and right wheel axle case mounting plates 12G, 12H of the rear chassis 12.

The drive device 28 is mounted on a rear side of the rear chassis 12. The drive device 28 is configured to include a hydraulic motor 29 and power transmission device 30 to rotatively drive the front axle 23 and the rear axle 26 by power of the engine 9. The hydraulic motor 29 is rotatively driven by pressurized oil from a hydraulic pump (not shown) driven by the engine 9. The power transmission device 30 has a gear change mechanism reducing rotational output of the hydraulic motor 29 to transmit a rotation outputted to the output shaft 30A to the front axle 23 and the rear axle 26.

A propeller shaft 31 is provided between an output shaft 30A of the power transmission device 30 which constitutes the drive device 28 and the front axle 23 (differential device 23B) . The propeller shaft 31 transmits rotational output of the drive device 28 to the front axle 23 as one wheel axle supported to the front chassis 13 capable of swinging in the upper-lower direction through the suspension system 25 in the front axle 23 and the rear axle 26. The propeller shaft 31 is configured to include a drive device side propeller shaft 31A connected to the output shaft 30A of the power transmission device 30, a wheel axle side propeller shaft 31B connected to the differential device 23B of the front axle 23, and a universal joint 31C connecting the drive device side propeller shaft 31A and the wheel axle side propeller shaft 31B.

Here, a center bearing 32 is mounted on the bracket body 22A of the wheel axle side rear bracket 22 provided on a lower surface of the rear chassis 12. The center bearing 32 rotatably supports a front side part of the drive device side propeller shaft 31A. That is, in the drive device side propeller shaft 31A, a rear side part is connected to the output shaft 30A of the power transmission device 30, and a front side part in proximity to the universal joint 31C is rotatably supported by the center bearing 32. In this case, the drive device side propeller shaft 31A is inserted through the propeller shaft insertion part 19A1 of the drive device side front bracket 19 (upright plate 19A) and the propeller shaft insertion part 20A1 of the drive device side rear bracket 20 (upright plate 20A). Therefore, the drive device side propeller shaft 31A is not displaced in the upper-lower direction with respect to the rear chassis 12.

On the other hand, in the wheel axle side propeller shaft 31B, a front side part is connected to the differential device 23B of the front axle 23, and a rear side part is connected to the drive device side propeller shaft 31A through the universal joint 31C. As a result, the wheel axle side propeller shaft 31B is configured to smoothly transmit rotation of the drive device side propeller shaft 31A through the universal joint 31C.

Therefore, when the engine 9 is on drive, the hydraulic motor 29 is rotatively driven by pressurized oil discharged from a hydraulic pump (not shown) . A rotation of the hydraulic motor 29 is output to the output shaft 30A of the power transmission device 30 in the state where a rotation of the hydraulic motor 29 is decelerated by the power transmission device 30. A rotation of the output shaft 30A is transmitted to the rear axle 26, and also to the front axle 23 through the propeller shaft 31. As a result, the left and right front wheels 24 and the left and right rear wheels 27 are rotatively driven, and thereby, enabling the wheel-type hydraulic excavator 1 to travel.

Subsequently, a drive device side propeller shaft cover 33 and a wheel axle side propeller shaft cover 35 adopted in this embodiment will be described.

The drive device side propeller shaft cover 33 is provided on a lower surface side of the rear chassis 12 in the state where the drive device side propeller shaft 31A is primarily covered from below. The drive device side propeller shaft cover 33, as shown in Fig. 6 and Fig. 7, is mounted on the drive device side front bracket 19 and the drive device side rear bracket 20 provided on the lower surface plate 12B of the rear chassis 12. The drive device side propeller shaft cover 33 covers a part other than the front side part of the drive device side propeller shaft 31A (part supported on the center bearing 32), and suppresses collision of rocks and the like against the drive device side propeller shaft 31A at the traveling of the wheel-type hydraulic excavator 1.

The drive device side propeller shaft cover 33 is configured by five rectangular shaped plates extending in the front-rear direction bridged between the drive device side front bracket 19 and the drive device side rear bracket 20. That is, the drive device side propeller shaft cover 33 is configured by a bottom surface cover 33A, a left inclined surface cover 33B, a right inclined surface cover 33C, a left side surface cover 33D, and a right side surface cover 33E. The bottom surface cover 33A is mounted on the lower plate 19D of the drive device side front bracket 19 and the lower plate 20D of the drive device side rear bracket 20. The left inclined surface cover 33B is mounted on the left inclined plate 19E of the drive device side front bracket 19 and the left inclined plate 20E of the drive device side rear bracket 20. The right inclined surface cover 33C is mounted on the right inclined plate 19F of the drive device side front bracket 19 and the right inclined plate 20F of the drive device side rear bracket 20. The left side surface cover 33D is mounted on the left side plate 19G of the drive device side front bracket 19 and the left side plate 20G of the drive device side rear bracket 20. The right side surface cover 33E is mounted on the right side plate 19H of the drive device side front bracket 19 and the right side plate 20H of the drive device side rear bracket 20. The bottom surface cover 33A forms a bottom surface of the drive device side propeller shaft cover 33.

The bottom surface cover 33A, the left and right inclined surface covers 33B, 33C and the left and right side surface covers 33D, 33E of the drive device side propeller shaft cover 33 are formed of a rectangular flat plate extending in the front-rear direction, for example, using a steel plate or the like. Therefore, the bottom surface cover 33A, the left and right inclined surface covers 33B, 33C and the left and right side surface covers 33D, 33E are detachably mounted on the drive device side front bracket 19 and the drive device side rear bracket 20 using a bolt 34. As a result, the drive device side propeller shaft cover 33 covers the drive device side propeller shaft 31A from below.

As described above, the drive device side propeller shaft cover 33 according to this embodiment is configured by five plates constituted by the bottom surface cover 33A, the left and right inclined surface covers 33B, 33C, and the left and right side surface covers 33D, 33E. As a result, only deformed covers of the bottom surface cover 33A, the left and right inclined surface covers 33B, 33C, and the left and right side surface covers 33D, 33E can readily be replaced even if, for example, the drive device side propeller shaft cover 33 is damaged by collision of rocks and the like.

On the other hand, the wheel axle side propeller shaft cover 35 is provided on a lower surface side of the rear chassis 12 in the state where the wheel axle side propeller shaft 31B, the universal joint 31C and the center bearing 32 are primarily covered from below. As shown in Fig. 6 and Fig. 8, the wheel axle side propeller shaft cover 35, is mounted on the wheel axle side front bracket 21 and the wheel axle side rear bracket 22 provided on the lower surface plate 12B of the rear chassis 12. The wheel axle side propeller shaft cover 35 covers a part other than a front side part of the drive device side propeller shaft 31A and a front side part of the wheel axle side propeller shaft 31B (part connected to the differential device 23B) . The wheel axle side propeller shaft cover 35 suppresses collision of rocks and the like against the wheel axle side propeller shaft 31B, the universal joint 31C and the center bearing 32 at the traveling of the wheel-type hydraulic excavator 1.

Here, the wheel axle side propeller shaft cover 35 is configured to include a bottom surface cover 36, a connecting plate 37, a left side surface cover 38, and a right side surface cover 39. The bottom surface cover 36 is formed of a rectangular plate extending in the front-rear direction. The bottom surface cover 36 forms a bottom surface of the wheel axle side propeller shaft cover 35 together with a lower plate 38C of the left side surface cover 38 and a lower plate 39C of the right side surface cover 39 which will be described later. In addition, a rear side part located on the drive device side propeller shaft cover 33 side in the bottom surface cover 36 corresponds to an extension part 36A extending toward the drive device side propeller shaft cover 33. The extension part 36A extends closer to a backward than the upright plate 19A of the drive device side front bracket 19 (see Fig. 6).

The connecting plate 37 is formed by folding a plate having an L-shaped section into a U-shape. The connecting plate 37 has a left side plate 37A, a right side plate 37B, and a lower plate 37C connecting the lower ends of the left and right side plates 37A, 37B and extending in the left-right direction. A rear side part of the bottom surface cover 36 is mounted on an intermediate part of the lower plate 37C in the left-right direction by using a bolt 40.

The left side surface cover 38 has a side plate 38A, a front plate 38B, and a lower plate 38C. The side plate 38A extends in the vertical direction with respect to the lower surface plate 12B of the rear chassis 12, and the front plate 38B is folded from a front end of the side plate 38A into the right side (the right side surface cover 39 side) . The lower plate 38C is fixed by means of welding or the like to the lower ends of the side plate 38A and the front plate 38B, and extends adjacent to the bottom surface cover 36 in the front-rear direction. The lower plate 38C forms the same plate as the bottom surface cover 36. Here, a rear side part of the side plate 38A is mounted on the left side plate 37A of the connecting plate 37 by using a bolt 40, and a rear side part of the lower plate 38C is mounted on the lower plate 37C of the connecting plate 37 by using a bolt 40. A rear side part located on the drive device side propeller shaft cover 33 side in the lower plate 38C corresponds to an extension part 38D. The extension part 38D extends from the side plate 38A toward the drive device side propeller shaft cover 33, and extends closer to backward than the upright plate 19A of the drive device side front bracket 19 (see Fig. 6).

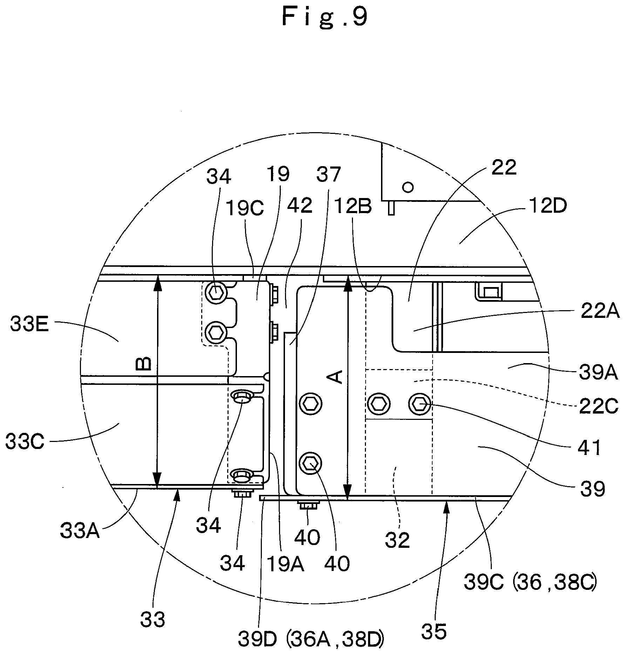

The right side surface cover 39 has a side plate 39A, a front plate 39B, and a lower plate 39C as in the left side surface cover 38. The side plate 39A extends in the vertical direction with respect to the lower surface plate 12B of the rear chassis 12, and the front plate 39B is folded from a front end of the side plate 39A into the left side (the left side surface cover 38 side). The lower plate 39C is fixed by means of welding or the like to the lower ends of the side plate 39A and the front plate 39B, and extends adjacent to the bottom surface cover 36 in the front-rear direction. The lower plate 39C forms the same plate as the bottom surface cover 36 (the bottom surface cover 36 and the lower plate 38C of the left side surface cover 38 overlap the lower plate 39C of the right side surface cover 39 in Fig. 9). Here, a rear side part of the side plate 39A is mounted to the right side plate 37B of the connecting plate 37 by using a bolt 40, and a rear side part of the lower plate 39C is mounted to the lower plate 37C of the connecting plate 37 by using a bolt 40. A rear side part located on the drive device side propeller shaft cover 33 side in the lower plate 39C corresponds to an extension part39D. The extension part 39D extends from the side plate 39A toward the drive device side propeller shaft cover 33, and extends closer to backward than the upright plate 19A of the drive device side front bracket 19 (see Fig. 6).

As described above, the wheel axle side propeller shaft cover 35 according to this embodiment is formed as a single member by integrating the bottom surface cover 36 and the left and right side surface covers 38, 39 through the connecting plate 37. Therefore, a front side part of the bottom surface cover 36 is mounted to the lower plate 21C of the wheel axle side front bracket 21 by using a bolt 41. A front side part of the side plate 38A of the left side surface cover 38 is mounted to the left side plate 21A of the wheel axle side front bracket 21 by using a bolt 41. An intermediate part in the front-rear direction of the side plate 38A is mounted to the left mounting plate 22B of the wheel axle side rear bracket 22 by using a bolt 41. A front side part of the lower plate 38C of the left side surface cover 38 is mounted to the lower plate 21C of the wheel axle side front bracket 21 by using a bolt 41. In addition, a front side part of the side plate 39A of the right side surface cover 39 is mounted to the right side plate 21B of the wheel axle side front bracket 21 by using a bolt 41. An intermediate part in the front-rear direction of the side plate 39A is mounted to the right mounting plate 22C of the wheel axle side rear bracket 22 by using a bolt 41. A front side part of the lower plate 39C of the right side surface cover 39 is mounted to the lower plate 21C of the wheel axle side front bracket 21 by using a bolt 41.

Here, as shown in Fig. 9, an interval in the upper-lower direction between a lower surface of the bottom surface cover 36, the lower plate 38C of the left side surface cover 38, and the lower plate 39C of right side surface cover 39 forming a bottom surface of the wheel axle side propeller shaft cover 35, and a lower surface of the lower surface plate 12B which constitutes the rear chassis 12 is defined as "A". Moreover, an interval in the upper-lower direction between a lower surface of the bottom surface cover 33A forming a bottom surface of the drive device side propeller shaft cover 33, and the lower surface of the lower surface plate 12B which constitutes the rear chassis 12 is defined as "B". In this embodiment, the interval A is set larger than the interval B (A>B) . As a result, interference of the wheel axle side propeller shaft 31B with the wheel axle side propeller shaft cover 35 can be suppressed even if the front axle 23 supported by the suspension system 25 swinging in the upper-lower direction is traced and the wheel axle side propeller shaft 31B is displaced in the upper-lower direction with the universal joint 31C serving as a fulcrum.

Moreover, a rear side part located on the drive device side propeller shaft cover 33 side in the bottom surface cover 36 which constitutes the bottom surface of the wheel axle side propeller shaft cover 35, the lower plate 38C of the left side surface cover 38, and the lower plate 39C of the right side surface cover 39 corresponds to extension parts 36A, 38D, 39D. The extension parts 36A, 38D, 39D extend from side plates 38A, 39A of the left and right side surface covers 38, 39 toward the drive device side propeller shaft cover 33. As shown in Fig. 6 and Fig. 9, the extension part 36A, the extension part 38D, and the extension part 39D are disposed closer to a lower side than the bottom surface cover 33A of the drive device side propeller shaft cover 33, and extend closer to a rear side than the upright plate 19A of the drive device side front bracket 19 (the extension parts 36A, 38D overlap the extension part 39D in Fig. 9) . As a result, a boundary part 42 between the drive device side propeller shaft cover 33 and the wheel axle side propeller shaft cover 35 is covered with each of the extension parts 36A, 38D, 39D from below. As a result, each of the extension parts 36A, 38D, 39D is configured to suppress intrusion of earth and sand or the like into the inside of the drive device side propeller shaft cover 33 and the wheel axle side propeller shaft cover 35 from a gap formed on the boundary part 42 between the drive device side propeller shaft cover 33 and the wheel axle side propeller shaft cover 35.

The wheel-type hydraulic excavator 1 according to this embodiment has the above described configuration, and the traveling operation will be explained.

When an onboard operator in a cab 7 operates an engine 9, a hydraulic motor 29 is rotatively driven by pressurized oil discharged from a hydraulic pump (not shown) . A rotation of the hydraulic motor 29 is output to the output shaft 30A of the power transmission device 30 in the state where a rotation of the hydraulic motor 29 is decelerated by the power transmission device 30. A rotation of the output shaft 30A is transmitted to the rear axle 26, and also to the front axle 23 through the propeller shaft 31. As a result, the left and right front wheels 24 and the left and right rear wheels 27 are rotatively driven to enable the wheel-type hydraulic excavator 1 to travel.

The front axle 23 supporting the left and right front wheels 24 swings in the upper-lower direction depending on the degree of unevenness on the road surface at the traveling of the wheel-type hydraulic excavator 1. At this time, the wheel axle side propeller shaft 31B connected to the differential device 23B of the front axle 23 is displaced in the upper-lower direction with the universal joint 31C serving as a fulcrum, and can transmit a rotation of a drive device side propeller shaft 31A to the front axle 23.

In this case, according to this embodiment, a propeller shaft cover covering the propeller shaft 31 is configured by a drive device side propeller shaft cover 33 covering the drive device side propeller shaft 31A and the wheel axle side propeller shaft cover 35 covering the wheel axle side propeller shaft 31B. Here, as shown in Fig. 9, an interval between the lower surface of the bottom surface cover 36, the lower plate 38C of the left side surface cover 38 and the lower plate 39C of the right side surface cover 39 forming the bottom surface of the wheel axle side propeller shaft cover 35, and the lower surface of the lower surface plate 12B which constitutes the rear chassis 12 is defined as "A". Moreover, an interval between the lower surface of the bottom surface cover 33A forming the bottom surface of the drive device side propeller shaft cover 33 and the lower surface of the lower surface plate 12B which constitutes the rear chassis 12 is defined as "B". Therefore, the interval A is set larger than the interval B (A>B).

As a result, interference of the wheel axle side propeller shaft 31B with the wheel axle side propeller shaft cover 35 can assuredly be suppressed even if the front axle 23 supported by the suspension system 25 swings in the upper-lower direction and the wheel axle side propeller shaft 31B is displaced in the upper-lower direction with the universal joint 31C serving as a fulcrum. Consequently, the drive device side propeller shaft 31A can be protected by the drive device side propeller shaft cover 33. Moreover, the wheel axle side propeller shaft 31B, the universal joint 31C, and the center bearing 32 can be protected by the wheel axle side propeller shaft cover 35.

In this case, a height from the bottom surface of the drive device side propeller shaft cover 33 (the lower surface of the bottom surface cover 33A) to the ground can be set larger than a height from the bottom surface of the wheel axle side propeller shaft cover 35 (the lower surface of the bottom surface cover 36, the lower plate 38C of the left side surface cover 38 and the lower plate 39C of the right side surface cover 39) to the ground. Thus, collision of rocks and the like against the drive device side propeller shaft cover 33 can be suppressed, and weight reduction of the drive device side propeller shaft cover 33 can be realized.

Moreover, in this embodiment, extension parts 36A, 38D, 39D are provided at rear side parts of the bottom surface cover 36, the lower plate 38C of the left side surface cover 38, and the lower plate 39C of the right side surface cover 39 which constitute the bottom surface of the wheel axle side propeller shaft cover 35. The extension parts 36A, 38D, 39D extend from side plates 38A, 39A of the left and right side surface covers 38, 39 toward the drive device side propeller shaft cover 33. Therefore, the extension part 36A, the extension part 38D, and extension part 39D cover the boundary part 42 between the drive device side propeller shaft cover 33 and the wheel axle side propeller shaft cover 35 from below. Therefore, it is possible to suppress intrusion of earth and sand and the like into the inside of the drive device side propeller shaft cover 33 and the wheel axle side propeller shaft cover 35 through a gap formed on the boundary part 42 between the drive device side propeller shaft cover 33 and the wheel axle side propeller shaft cover 35. As a result, durability of the drive device side propeller shaft cover 33 and the wheel axle side propeller shaft cover 35 can be improved.

On the other hand, the rear chassis 12 normally demonstrates small deformation at an inner part of the circle member 14, and major deformation at an outer part of the circle member 14 when such deformation occurs to the rear chassis 12 at the traveling of the wheel-type hydraulic excavator 1. Thus, the resulting difference in the deformation amount of the rear chassis 12 between an inner side and an outer side of the circle member 14 can readily damage a single propeller shaft cover when, for example, the entire propeller shaft 31 is covered with a single propeller shaft cover.

On the contrary, in this embodiment, a propeller shaft cover covering a propeller shaft 31 is divided into two halves: a drive device side propeller shaft cover 33 covering a drive device side propeller shaft 31A and a wheel axle side propeller shaft cover 35 covering a wheel axle side propeller shaft 31B. Therefore, the drive device side propeller shaft cover 33 is mounted on a drive device side front bracket 19 and a drive device side rear bracket 20 disposed between a front side tangent T1-T1 and a rear side tangent T2-T2 of a circle member 14 of a rear chassis 12. On the other hand, a wheel axle side propeller shaft cover 35 is mounted on a wheel axle side front bracket 21 and a wheel axle side rear bracket 22 disposed on an outer side of the circle member 14 closer to a front side than the front side tangent T1-T1 of the circle member 14 of the rear chassis 12. Consequently, two halves: the drive device side propeller shaft cover 33 and the wheel axle side propeller shaft cover 35 are hardly affected by a difference in the deformation amount of the rear chassis 12 between an inner side and an outer side of the circle member 14 even if the chassis 11 causes deformation at the traveling of wheel-type hydraulic excavator 1. Consequently, deformation of the drive device side propeller shaft cover 33 and the wheel axle side propeller shaft cover 35 can be suppressed to extend the service life, and the propeller shaft 31, the center bearing 32 and the like can be guarded for a long time.

It should be noted that in the embodiment, the front axle 23 is supported capable of swinging in the upper-lower direction through the suspension system 25. Thereby, a case where the propeller shaft 31 connecting the front axle 23 and the drive device 28 is covered with the drive device side propeller shaft cover 33 and the wheel axle side propeller shaft cover 35 is exemplified. However, the present invention is not limited thereto, and may be configured such that for example, a rear axle is supported capable of swinging in the upper-lower direction through a suspension system to cover a propeller shaft connecting the rear axle and a drive device by a drive device side propeller shaft cover and a wheel axle side propeller shaft cover.

### DESCRIPTION OF REFERENCE NUMERALS

1: Wheel-type hydraulic excavator
2: Lower traveling structure
3: Swing circle
4: Upper revolving structure
11: Chassis
12: Rear chassis
12B: Lower surface plate (Lower surface)
14: Circle member
19: Drive device side front bracket (Drive device side bracket)
20: Drive device side rear bracket (Drive device side bracket)
21: Wheel axle side front bracket (Wheel axle side bracket)
22: Wheel axle side rear bracket (Wheel axle side bracket)
23: Front axle
24: Front wheel
25: Suspension system
26: Rear axle
27: Rear wheel
28: Drive device
31: Propeller shaft
31A: Drive device side propeller shaft
31B: Wheel axle side propeller shaft
31C: Universal joint
33: Drive device side propeller shaft cover
33A: Bottom surface cover (Bottom surface)
35: Wheel axle side propeller shaft cover
36: Bottom surface cover (Bottom surface)
36A, 38D, 39D: Extension part
38: Left side surface cover
38C: Lower plate (Bottom surface)
39: Right side surface cover
39C: Lower plate (Bottom surface)
42: Boundary part

## Claims

1. A construction machine comprising:
an automotive lower traveling structure (2) having left and right front wheels (24) and left and right rear wheels (27); and
an upper revolving structure (4) rotatably mounted on the lower traveling structure (2) through a swing circle (3) and in which a prime mover (9) is provided;
the lower traveling structure (2) being configured to include:
a chassis (11) constituting a support structure;
a front axle (23) provided on a front side of the chassis (11) and on which the left and right front wheels (24) are mounted;
a rear axle (26) provided on a rear side of the chassis (11) and on which the left and right rear wheels (27) are mounted;
a drive device (28) mounted on the chassis (11) and rotatively driving the front axle (23) and the rear axle (26) by power of the prime mover (9); and
a propeller shaft (31) transmitting output of the drive device (28) to the front axle (23) and the rear axle (26), wherein
a suspension system (25) is provided between the chassis (11) and a wheel axle which is any one of the front axle (23) and the rear axle (26), and supports capable of swinging the wheel axle in a upper-lower direction,
the propeller shaft (31) comprising:
a drive device side propeller shaft (31A) connected to the drive device (28);
a wheel axle side propeller shaft (31B) connected to the one of the front axle (23) and the rear axle (26) supported by the suspension system (25); and
a universal joint (31C) connecting the drive device side propeller shaft (31A) and the wheel axle side propeller shaft (31B), **characterized in that**:
the lower traveling structure (2) comprises:
a drive device side propeller shaft cover (33) provided on a lower surface (12B) of the chassis (11) and covering the drive device side propeller shaft (31A) from below; and
a wheel axle side propeller shaft cover (35) provided on the lower surface (12B) of the chassis (11) and covering the wheel axle side propeller shaft (31B) from below, wherein
an interval (A) in the upper-lower direction between a bottom surface (36, 38C, 39C) of the wheel axle side propeller shaft cover (35) and the lower surface (12B) of the chassis (11) is set larger than an interval (B) in the upper-lower direction between a bottom surface (33A) of the drive device side propeller shaft cover (33) and the lower surface (12B) of the chassis (11) .

2. The construction machine according to claim 1, wherein
an extension part (36A, 38D, 39D) extending toward the drive device side propeller shaft cover (33) is provided at a part located on the drive device side propeller shaft cover side in the bottom surface (36, 38C, 39C) of the wheel axle side propeller shaft cover (35); and
a boundary part (42) between the drive device side propeller shaft cover (33) and the wheel axle side propeller shaft cover (35) is covered from below by the extension part (36A).

3. The construction machine according to claim 1, wherein
a cylindrical circle member (14) on which the swing circle (3) is mounted is provided on an upper surface (12A) of the chassis (11);
a drive device side bracket (19, 20) mounting the drive device side propeller shaft cover (33) and a wheel axle side bracket (21, 22) mounting the wheel axle side propeller shaft cover (35) are provided on the lower surface (12B) of the chassis (11) ;
the drive device side bracket (19, 20) is provided on the lower surface (12B) of the chassis (11), and is disposed within a range that is on a rear side with respect to a front side tangent (T1-T1) which is perpendicular in the longitudinal direction of the chassis (11) and is tangent to a front end of the circle member (14); and
the wheel axle side bracket (21, 22) is provided on the lower surface (12B) of the chassis (11), and is disposed within a range that is on a front side with respect to the front side tangent (T1-T1) of the circle member (14).

4. The construction machine according to claim 3, wherein
the drive device side bracket (19, 20) comprises:
a drive device side front bracket (19); and
a drive device side rear bracket (20) that is closer to a rear side than the drive device side front bracket (19), wherein
the drive device side rear bracket (20) is provided on the lower surface (12B) of the chassis (11), and is disposed within a range that is on a front side with respect to a rear side tangent (T2-T2) which is perpendicular in the longitudinal direction of the chassis (11) and is tangent to a rear end of the circle member (14) .

5. The construction machine according to claim 1, wherein
the drive device side propeller shaft cover (33) covers a part other than a front side part of the drive device side propeller shaft (31A), wherein
the wheel axle side propeller shaft cover (35) covers a part other than the front side part of the drive device side propeller shaft (31A) and a front side part of the wheel axle side propeller shaft (31B).

## Patentansprüche

1. Baumaschine, umfassend:
eine untere Selbstfahrstruktur (2) mit linken und rechten Vorderrädern (24) und linken und rechten Hinterrädern (27); und
eine obere drehbare Struktur (4), die über einen Schwenkkreis (3) drehbar an der unteren Fahrstruktur (2) angebracht ist und in der eine Antriebsmaschine (9) vorgesehen ist;
wobei die untere Fahrstruktur (2) so konfiguriert ist, dass sie umfasst:
ein Chassis (11), das eine Trägerstruktur bildet;
eine Vorderachse (23), die an einer Vorderseite des Chassis (11) vorgesehen ist und an der das linke und das rechte Vorderrad (24) angebracht sind;
eine Hinterachse (26), die an einer Rückseite des Chassis (11) vorgesehen ist und an der das linke und das rechte Hinterrad (27) angebracht sind;
eine Antriebsvorrichtung (28), die auf dem Chassis (11) angebracht ist und die Vorderachse (23) und die Hinterachse (26) durch die Kraft der Antriebsmaschine (9) drehbar antreibt; und
eine Gelenkwelle (31), die die Leistung der Antriebsvorrichtung (28) auf die Vorderachse (23) und die Hinterachse (26) überträgt, wobei
ein Aufhängungssystem (25) zwischen dem Chassis (11) und einer Radachse, die entweder die Vorderachse (23) oder die Hinterachse (26) ist, vorgesehen ist und Abstützungen, die in der Lage sind, die Radachse in einer Oben-Unten-Richtung zu verschwenken,
wobei die Gelenkwelle (31) umfasst:
eine antriebsvorrichtungsseitige Gelenkwelle (31A), die mit der Antriebsvorrichtung (28) verbunden ist;
eine radachsenseitige Gelenkwelle (31B), die mit der Vorderachse (23) oder der Hinterachse (26) verbunden ist, die von dem Aufhängungssystem (25) abgestützt ist; und
ein Kardangelenk (31C), das die antriebsvorrichtungsseitige Gelenkwelle (31A) und die radachsenseitige Gelenkwelle (31B) verbindet,
**dadurch gekennzeichnet, dass**:
die untere Fahrstruktur (2) umfasst:
eine antriebsvorrichtungsseitige Gelenkwellenabdeckung (33), die an einer unteren Fläche (12B) des Chassis (11) vorgesehen ist und die antriebsvorrichtungsseitige Gelenkwelle (31A) von unten abdeckt; und
eine radachsenseitige Gelenkwellenabdeckung (35), die an der unteren Fläche (12B) des Chassis (11) vorgesehen ist und die radachsenseitige Gelenkwelle (31B) von unten abdeckt, wobei
ein Abstand (A) in der Oben-Unten-Richtung zwischen einer Unterseitenfläche (36, 38C, 39C) der radachsenseitigen Gelenkwellenabdeckung (35) und der unteren Fläche (12B) des Chassis (11) größer festgelegt ist als ein Abstand (B) in der Oben-Unten-Richtung zwischen einer Unterseitenfläche (33A) der antriebsvorrichtungsseitigen Gelenkwellenabdeckung (33) und der unteren Fläche (12B) des Chassis (11).

2. Baumaschine nach Anspruch 1, wobei
ein Verlängerungsteil (36A, 38D, 39D), das sich in Richtung der antriebsvorrichtungsseitigen Gelenkwellenabdeckung (33) erstreckt, an einem Teil vorgesehen ist, der auf der antriebsvorrichtungsseitigen Gelenkwellenabdeckungsseite in der Unterseitenfläche (36, 38C, 39C) der radachsenseitigen Gelenkwellenabdeckung (35) angeordnet ist; und
ein Grenzteil (42) zwischen der antriebsvorrichtungsseitigen Gelenkwellenabdeckung (33) und der radachsenseitigen Gelenkwellenabdeckung (35) von unten durch das Verlängerungsteil (36A) abgedeckt ist.

3. Baumaschine nach Anspruch 1, wobei
ein zylindrisches Kreiselement (14), auf dem der Schwenkkreis (3) montiert ist, an einer oberen Fläche (12A) des Chassis (11) vorgesehen ist;
eine antriebsvorrichtungsseitige Halterung (19, 20), an der die antriebsvorrichtungsseitige Gelenkwellenabdeckung (33) angebracht ist, und eine radachsenseitige Halterung (21, 22), an der die radachsenseitige Gelenkwellenabdeckung (35) angebracht ist, an der unteren Fläche (12B) des Chassis (11) vorgesehen sind;
die antriebsvorrichtungsseitige Halterung (19, 20) an der unteren Fläche (12B) des Chassis (11) vorgesehen ist und in einem Bereich angeordnet ist, der sich auf einer Rückseite in Bezug auf eine vorderseitigen Tangente (T1-T1) befindet, die senkrecht in der Längsrichtung des Chassis (11) ist und tangential zu einem vorderen Ende des Kreiselements (14) ist; und
die radachsenseitige Halterung (21, 22) an der unteren Fläche (12B) des Chassis (11) vorgesehen ist und in einem Bereich angeordnet ist, der sich auf einer Vorderseite in Bezug auf die vorderseitige Tangente (T1-T1) des Kreiselements (14) befindet.

4. Baumaschine nach Anspruch 3, wobei
die antriebsvorrichtungsseitige Halterung (19, 20) umfasst:
eine antriebsvorrichtungsseitige vordere Halterung (19); und
eine antriebsvorrichtungsseitige hintere Halterung (20), die sich näher an einer Rückseite befindet als die antriebsvorrichtungsseitige vordere Halterung (19), wobei
die antriebsvorrichtungsseitige hintere Halterung (20) an der unteren Fläche (12B) des Chassis (11) vorgesehen ist und in einem Bereich angeordnet ist, der sich auf einer Vorderseite in Bezug auf eine rückseitige Tangente (T2-T2) befindet, die senkrecht in der Längsrichtung des Chassis (11) und tangential zu einem hinteren Ende des Kreiselements (14) ist.

5. Baumaschine nach Anspruch 1, wobei
die antriebsvorrichtungsseitige Gelenkwellenabdeckung (33) einen anderen Teil als einen vorderseitigen Teil der antriebsvorrichtungsseitigen Gelenkwelle (31A) abdeckt, wobei
die radachsenseitige Gelenkwellenabdeckung (35) einen anderen Teil als den vorderseitigen Teil der antriebsvorrichtungsseitigen Gelenkwelle (31A) und einen vorderseitigen Teil der radachsenseitigen Gelenkwelle (31B) abdeckt.

## Revendications

1. Machine de chantier comprenant :
une structure de déplacement inférieure (2) automotrice ayant des roues avant de gauche et de droite (24) et des roues arrière de gauche et de droite (27) ; et
une structure pivotante supérieure (4) montée en rotation sur la structure de déplacement inférieure (2) via une couronne de pivotement (3) et dans laquelle il est prévu un moteur premier (9) ; et
la structure de déplacement inférieure (2) étant configurée pour inclure :
un châssis (11) qui constitue une structure de support ;
un essieu avant (23) prévu sur un côté avant du châssis (11) et sur lequel sont montées les roues avant de gauche et de droite (24) ;
un essieu arrière (26) prévu sur un côté arrière du châssis (11) et sur lequel sont montées les roues arrière de gauche et de droite (27) ;
un dispositif d'entraînement (28) monté sur le châssis (11) et entraînant en rotation l'essieu avant (23) et l'essieu arrière (26) via une puissance du moteur premier (9) ; et
un arbre de propulsion (31) qui transmet une sortie du dispositif d'entraînement (28) à l'essieu avant (23) et à l'essieu arrière (26), dans laquelle
un système de suspension (25) est prévu entre le châssis (11) et un essieu à roues qui est l'un quelconque de l'essieu avant (23) et de l'essieu arrière (26), et supporte avec faculté de pivotement l'essieu à roues dans une direction haut/bas,
l'arbre de propulsion (31) comprenant :
un arbre de propulsion côté dispositif d'entraînement (31A) connecté au dispositif d'entraînement (28) ;
un arbre de propulsion côté essieu à roues (31B) connecté à l'un de l'essieu avant (23) et de l'essieu arrière (26) supporté par le système de suspension (25) ; et
une jonction universelle (31C) connectant l'arbre de propulsion côté dispositif d'entraînement (31A) et l'arbre de propulsion côté essieu à roues (31B), **caractérisé en ce que** :
la structure de déplacement inférieure (2) comprend :
une couverture d'arbre de propulsion côté dispositif d'entraînement (33) prévue sur une surface inférieure (12B) du châssis (11) et couvrant l'arbre de propulsion côté dispositif d'entraînement (31A) par dessous ; et
une couverture d'arbre de propulsion côté essieu à roues (35) prévue sur la surface inférieure (12B) du châssis (11) et couvrant l'arbre de propulsion côté essieu à roues (31B) par dessous, dans lequel
un intervalle (A) dans la direction haut/bas entre une surface de fond (36, 38C, 39C) de la couverture d'arbre de propulsion côté essieu à roues (35) et la surface inférieure (12B) du châssis (11) est fixé plus grand qu'un intervalle (B) dans la direction haut/bas entre une surface de fond (33A) de la couverture d'arbre de propulsion côté dispositif d'entraînement (33) et la surface intérieure (12B) du châssis (11).

2. Machine de chantier selon la revendication 1, dans laquelle
une partie en extension (36A, 38D, 39D) en extension vers la couverture d'arbre de propulsion côté dispositif d'entraînement (33) est prévue au niveau d'une partie située sur le côté de la couverture d'arbre de propulsion côté dispositif d'entraînement dans la surface de fond (36, 38C, 39C) de la couverture d'arbre de propulsion côté essieu à roues (35) ; et
une partie frontière (42) entre la couverture d'arbre de propulsion côté dispositif d'entraînement (33) et la couverture d'arbre de propulsion côté essieu à roues (35) est couverte par dessous par la partie en extension (36A).

3. Machine de chantier selon la revendication 1, dans laquelle
un élément circulaire cylindrique (14) sur lequel est montée la couronne de pivotement (3) est prévu sur une surface supérieure (12A) du châssis (11) ;
une monture côté dispositif d'entraînement (19, 20) pour la couverture d'arbre de propulsion côté dispositif d'entraînement (33) et une monture côté essieu à roues (21, 22) pour monter la couverture d'arbre de propulsion côté essieu à roues (35) sont prévues sur la surface inférieure (12B) du châssis (11) ;
la monture côté dispositif d'entraînement (19, 20) est prévue sur la surface inférieure (12B) du châssis (11), et est disposée à l'intérieur d'une plage qui est sur un côté arrière par rapport à une tangente côté avant (T1-T1) qui est perpendiculaire dans la direction longitudinale du châssis (11) et qui est tangente à une extrémité avant de l'élément circulaire (14) ; et
la monture côté essieu à roues (21, 22) est prévue sur la surface inférieure (12B) du châssis (11), et est disposée à l'intérieur d'une plage qui est sur un côté avant par rapport à la tangente côté avant (T1-T1) de l'élément circulaire (14).

4. Machine de chantier selon la revendication 3, dans laquelle la monture côté dispositif d'entraînement (19, 20) comprend :
une monture avant côté dispositif d'entraînement (19 ) ; et
une monture arrière côté dispositif d'entraînement (20) qui est plus près d'un côté arrière que la monture avant côté dispositif d'entraînement (19), dans laquelle
la monture arrière côté dispositif d'entraînement (20) est prévue sur la surface inférieure (12B) du châssis (11), et est disposée à l'intérieur d'une plage qui est sur un côté avant par rapport à une tangente côté arrière (T2-T2) qui est perpendiculaire dans la direction longitudinale du châssis (11) et qui est tangente à une extrémité arrière de l'élément circulaire (14).

5. Machine de chantier selon la revendication 1, dans laquelle
la couverture d'arbre de propulsion côté dispositif d'entraînement (33) couvre une partie autre qu'une partie côté avant de l'arbre de propulsion côté dispositif d'entraînement (31A), dans laquelle
la couverture d'arbre de propulsion côté essieu à roues (35) couvre une partie autre que la partie côté avant de l'arbre de propulsion côté dispositif d'entraînement (31A) et qu'une partie côté avant de l'arbre de propulsion côté essieu à roues (31B).
